# EUROPEAN PATENT SPECIFICATION

(11) **EP 3 606 323 B1**
(45) Date of publication and mention of the grant of the patent: **22.09.2021**
(21) Application number: 18716595.6
(22) Date of filing: 06.04.2018
(51) Int. Cl.: A01B 69/00

(54) **AGRICULTURAL SYSTEM COMPRISING A TRACTOR AND A TRAILED IMPLEMENT PROVIDED WITH ANTI-COLLISION SYSTEM**
LANDWIRTSCHAFTLICHES SYSTEM, MIT EINEM TRAKTOR UND EINEM GEZOGENEN ARBEITSGERÄT VERSEHEN MIT EINEM KOLLISIONSSCHUTZSYSTEM
SYSTÈME AGRICOLE COMPRENANT UN TRACTEUR ET UN OUTIL TRAÎNÉ ÉQUIPÉ D'UN SYSTÈME ANTI-COLLISION

(30) Priority: 06.04.2017 IT 201700038173
(43) Date of publication of application: 12.02.2020
(73) Proprietor: CNH Industrial Italia S.p.A., 10135 Torino (IT)
(72) Inventor: FERRARI, Luca, 41043 Formigine (Modena) (IT); PAOLINI, Francesco, 41122 Modena (IT)
(74) Representative: CNH Industrial IP Department
(86) International application number: PCT/EP2018/058816
(87) International publication number: WO 2018/185261

(56) References cited:
- WO-A1-2012/041743
- DE-A1- 10 065 230
- DE-A1-102005 027 846
- DE-A1-102009 007 990
- DE-A1-102013 107 710

## Description

The present invention relates to an agricultural system comprising a tractor provided with an anti-collision system and a trailed implement.

### BACKGROUND OF THE INVENTION

Driving an agricultural system comprising a tractor and a trailed implement requires attention to the driver during manoeuvring, e.g. steering at a short radius, in order to avoid rear collision of the drawbar of the trailed implement with the tractor. Such collision may damage rear tires of the tractor and/or front portions or projections of the implement. Furthermore, an implement may be connected to a hydraulic power system of the tractor via hydraulic hoses that may be damaged if pressed between the drawbar and rear projection of the tractor during e.g. a minimum radius turn.

WO2012/041743 discloses a combination of a towing vehicle and a towed device with a reduced turning circle at the end of the field including sensors for generating command signals upon detection of warning positions. DE-A 100 65 230 discloses the use of proximity sensors connected to a monitor zone positioned at the rear part of a vehicle.

The object of the present invention is to provide an agricultural system comprising a tractor and a trailed implement provided with an anti-collision system that is more effective, simple and reliable with respect the prior art.

### SUMMARY OF THE INVENTION

The object of the present invention is achieved by a tractor according to claim 1.

Additional features of the invention are comprised in the dependent claims.

### BRIEF DESCRIPTION OF THE DRAWINGS

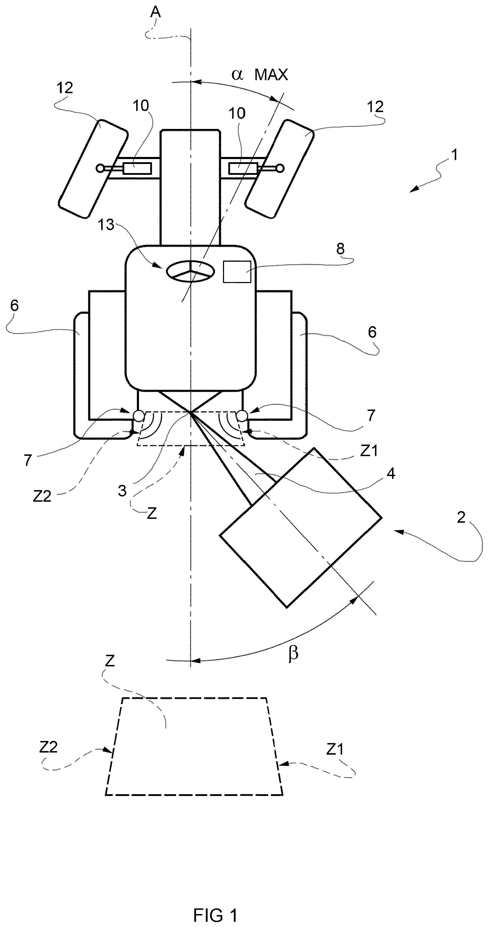

For a better understanding of the present invention, the latter will further be disclosed with reference to the accompanying figure that is a schematic plan view of an agricultural system comprising a tractor and a trailed implement realized according to the invention.

### DETAILED DESCRIPTION.

The attached figure refers as a whole to an agricultural system comprising a tractor 1 (shown schematically) and an attachable trailed implement 2 (shown schematically) attached to the tractor 1 via a towing hook 3 and a drawbar 4.

According to the present invention, an anti-collision system is provided in the rear side of the tractor 1 to avoid collisions between the drawbar 4 / parts carried by the drawbar 4 and rear parts of the tractor 1, in particular rear wheels 6.

The anti-collision system comprises a number of proximity sensors 7 (of known kind) that are designed to define a safe zone Z that is located between the rear side of the tractor 1 and the front of the trailed implement 2. In the example the safe zone Z has the shape of trapezoid whose minor side is located between the rear wheels 6 of the tractor 6.

In the example provided a pair of sensors 7 located at opposite sides with respect to a longitudinal axis or plane A of tractor 1 is shown. Of course, sensors 7 may be either symmetric or non-symmetric with respect to axis A.

Different kinds of sensors 7 may be used, for instance:
Ultrasonic sensors;
laser sensors (e.g. LiDAR);
3D/2D cameras and an associated software for determining shapes/dimensions;
mechanical contact sensors;

The safe zone Z is limited, inter alia, by a first (right) lateral side Z1 that is spaced with respect to the nearby part of the tractor (in this case right rear wheel 6) of a safety distance (some centimetres) and by a second (left) lateral side Z2 that is spaced with respect to the nearby part of the tractor (in this case left rear wheel 6) of a safety distance (some centimetres). In the example sides Z1 and Z2 are symmetrical with respect to longitudinal axis A.

The area and the shape of the safe zone Z may be fixed or may have boundaries that are automatically calculated based on the speed of the tractor 1 so that with the increasing of the speed first and second lateral side Z1, Z2 are progressively getting closer one with respect to the other so that the width of the safe rotating zone Z is reduced and also the maximum angle β (between axis A and the axis of the drawbar 4) within the safe zone Z is reduced.

Alternatively or in combination with the above feature the width of the safe zone Z may be dependent on the angular speed of rotation of the steering wheel 13 applied by the driver so that with the increasing of the angular speed the first and second lateral sides Z1, Z2 are progressively getting closer one with respect to the other so that the width of the safe zone Z is reduced and also the maximum angle β (between axis A and the axis of the drawbar 4) within the safe zone Z is reduced.

The proximity sensors 7 operate in conjunction of an electronic unit 8 (ECU) that generates command signals for one or more power actuators 10 of tractor 1 that control the movement of the tractor 1.

The electronic control unit 8 is designed to detect a warning position when the drawbar 4 and/or the parts carried by the drawbar 4 reaches a position corresponding to the first lateral Z1 or the second lateral side Z2. In such a position the drawbar 4 and/or the parts carried by the drawbar 4 is very close to one of the rear wheel 6 of the tractor 1 and the risk of collision between parts is high.

The parts carried by the drawbar 4 may comprise the hydraulic tubes (not shown) for connection of implement 2 with a hydraulic power system of tractor 1 and/or electric power cables (not shown) extending between the tractor 1 and the implement 2 and/or data cables (not shown), such as bus cables, extending between the tractor 1 and the implement 2.

Upon detection of the warning position the electronic control unit 8 is designed to operate on the actuators 10 of the tractor 1 to produce an action so the drawbar 4 and/or the parts carried by the drawbar will remain in the safe rotating zone Z and will not get closer to the wheels 6. In other words, such an action is intended for avoiding a further rotation of the drawbar 4 / of the parts carried by the drawbar 4 that may come into contact with the rear wheels 6.

The warning position may be reached in some driving conditions, for instance during steering at a short radius.

In particular, upon detection of the warning position the electronic control unit 8 is designed to operate the control of the actuators 10 that operate the steering of the front wheels 12 of tractor 1 so that, upon detection of the warning position, the actual steering features of tractor 1 are automatically modified.

More specifically, control unit 8 is designed to limit or reduce the actual steering angle of front wheels 12 of tractor 1 for a defined period of time (typically some seconds).

In the case that the steering angle is limited to a maximum angle α_{MAX} (i.e. a further command of the driver on the steering wheel 13 does not produce an increase of the steering angle α), it is limited only the maximum steering angle of the steering direction corresponding to the lateral side Z1, Z2 whose violation is detected.

For instance, if left side Z2 of safe steering zone Z is reached, only left maximum steering angle is limited.

By temporarily reducing or limiting the value of the maximum steering angle of front wheels 12, tractor 1 is forced to keep a trajectory that avoids contact between the drawbar 4/ parts carried by drawbar and rear wheels 6 i.e. damages.

Alternatively the electronic control unit 8 may be provided with a console for data entry for entering (manually or by means of an ISOBUS communication) the dimensional parameters of the trailer 1, for instance the length of the drawbar, the width of the trailed implement, etc; the electronic control unit 8 is designed to calculate the amount of reduction of the steering angle or the maximum steering angle based on the introduced parameters.

The electronic unit 8 may be also cooperating with automating driving system via GPS that calculate automatically a trajectory of the tractor 1; such a trajectory may be modified upon the detection of the warning position.

Alternatively or in combination with the above control of the steering angle, electronic control unit 8 is designed to operate the control of the actuators (not shown) that operate on the PTO unit. Preferably, the electronic control unit 8 is designed to disengage a PTO so that the latter cannot rotate when the warning position is detected.

Alternatively or in combination with the above control of steering angle and/or PTO, electronic control unit 8 is designed to operate the control of the actuators (not shown) that operate on the braking system of tractor 1 so that, upon detection of the warning position, a braking action is automatically activated.

Such an automatic braking action concurs in decelerating the tractor 1 and contributes in avoiding a sudden contact between the drawbar 4/ parts carried by drawbar 4 and rear wheels 6. The automatic braking action may be "cancelled", (i.e. deactivated) by a subsequent manual action of the driver, for instance when the driver presses a braking pedal (not shown) to control manually the braking operation. The automatic braking action may be realized on the tractor 1 alone, on the implement 2 alone (of course in the case that the implement 2 is provided with an independent braking system) or on both the tractor 1 and the implement 2.

In alternative or in combination, braking features of tractor 1 are controlled by control unit 8 as long as a warning position is detected. For example, if the automatic braking is activated and the driver presses the braking pedal but the warning position is still detected when the driver releases the braking pedal, then the automatic braking program would still work and operates as above described. For example, the automatic braking may comprise a step of applying a predetermined braking torque in order to gently decelerate tractor 1.

As above described, control unit 8 provides for active control of power actuators or systems of tractor 1.

It is also possible that control unit ECU controls warning devices (acoustic, visual or any kind of warning device) that are activated when violation is detected so as to warn the driver.

In addition, the electronic control unit 8 may also be designed, upon detection of the warning position, to move rear view devices (rear-view mirrors /cameras) so that the rear-view devices will be focused on the first lateral Z1 or the second lateral side Z2 where the warning position was detected.

The advantages of a tractor 1 according to the present invention are as follows.

Sensors 7 in conjunction of electronic unit 8 automatically avoid contacts between the drawbar 4/ the parts carried by the drawbar 4 and the rear wheel 6 by keeping the drawbar 4/ the parts carried by the drawbar 4 in the safe zone Z. When the drawbar 4/ the parts carried by the drawbar 4 are too close to the rear wheel 6 the warning position is detected and the electronic unit 8 immediately enables an automatic action (reducing/limiting the steering angle, automatic braking) to avoid a further angular movement of the drawbar towards the rear wheels.

The driver may safely turn the tractor without running the risk of damaging the implement or the tractor.

This automatic control reduces the need of high attention and the stress of the driver. Furthermore, also the risk of overturning the tractor 1 is reduced when tractor 1 works in side hill operations.

## Claims

1. A tractor (1) with means for attaching a trailed implement (2) via a drawbar (4), the tractor (1) comprising a right rear wheel (6) and a left rear wheel (6), a control unit (8) and an anti-collusion system, **characterized by** comprising a plurality of proximity sensors (7) that are designed to define a safe zone (Z) that is located between the rear side of the tractor (1) and said trailed implement (2) when attached; the safe zone (Z) is limited by a right lateral side (Z1) that is spaced with respect to the right rear wheel (6) of the tractor at a safety distance of some centimetres and by a left lateral side (Z2) that is spaced with respect to the left rear wheel (6) of the tractor at a safety distance of some centimetres;
the plurality of proximity sensors (7) are configured to operate in conjunction of an electronic control unit (8) that is designed to generate command signals for at least one power actuator of said tractor (1) that controls the movement of the tractor (1); the electronic control unit (8) is designed to detect a warning position when the attached drawbar (4) or the parts carried by said drawbar reaches a position corresponding to the right side (Z1) or the left side (Z2); upon detection of the warning position the electronic control unit (8) is designed to operate on the at least one power actuator of the tractor (1) to produce an action so the attached drawbar (4) and the parts carried by said drawbar remain within the safe zone (Z).

2. A tractor (1) as claimed in claim 1, wherein said electronic control unit (8) is so designed that, upon detection of the warning position, the electronic control unit (8) operates the control of at least one actuator (10) that operate the steering of the tractor so that the steering features of the tractor (1) are automatically modified.

3. A tractor (1) as claimed in claim 2, wherein said electronic control unit (8) is designed to limit or reduce the actual steering angle of front wheels (7) of the tractor (1) for a defined period of time upon detection of the warning position.

4. A tractor (1) as claimed in claim 1, wherein the electronic control unit (8) is provided with means for data entry for entering the dimensional parameters of the said trailed implement (2); the electronic control unit (8) is designed to calculate the amount of reduction of the actual steering angle or the maximum steering angle based on the introduced parameters.

5. A tractor (1) as claimed in claim 1, wherein the electronic control unit (8) is designed to operate the control of the actuators that operate on the braking system of the tractor (1) so that, upon detection of the warning position, a braking action is automatically activated.

6. A tractor (1) as claimed in claim 5, wherein the automatic braking action is further configured to be deactivated by a manual action of the driver on the braking pedal to control manually the braking operation.

7. A tractor (1) as claimed in any of the preceding claims comprising rear view devices, wherein the electronic control unit (8) is designed, upon detection of the warning position, to produce a control signal to move the rear view devices so that said rear view devices will be focused on the right lateral side (Z1) or the left lateral side (Z2) where the warning position is detected.

8. A tractor (1) as claimed in claim 1 wherein the electronic control unit (8) is configured so that the area and the shape of the safe zone (Z) have boundaries that are automatically calculated based on the speed of the tractor or the angular speed of rotation of the steering wheel (13) of the tractor so that the width of the safe zone (Z) is reduced with an increase of one of said speeds.

9. A tractor (1) as claimed in claim 8, wherein the electronic control unit (8) is configured so that the safe zone Z has boundaries that are automatically calculated based on one of said speeds so that with the increase of one of said speeds the right and left lateral sides (Z1, Z2) are progressively getting closer one with respect to the other.

10. A tractor (1) as claimed in claim 1 wherein the electronic control unit (8) is configured to cooperate with an automated driving system that controls the steering wheel for modifying automatically a trajectory upon the detection of the warning position.

## Patentansprüche

1. Traktor (1) mit Mitteln zur Anbringung eines gezogenen Arbeitsgeräts (2) durch eine Zugdeichsel (4), wobei der Traktor (1) ein rechtes Hinterrad (6) und ein linkes Hinterrad (6), eine Steuereinrichtung (8) und ein Anti-Kollisionssystem aufweist,
**dadurch gekennzeichnet, dass**
es eine Mehrzahl von Näherungssensoren (7) aufweist, die dazu eingerichtet sind, um eine sichere Zone (Z) zu definieren, die sich zwischen der Rückseite des Traktors (1) und dem gezogenen Arbeitsgerät (2) befindet, wenn es angebracht ist;
wobei die sichere Zone (Z) durch eine rechte Seite (Z1), die bezüglich des rechten Hinterrades (6) des Traktors in einem Sicherheitsabstand von einigen Zentimetern beabstandet ist, und durch eine linke Seite (Z2) begrenzt ist, die bezüglich des linken Hinterrades (6) des Traktors in einem Sicherheitsabstand von einigen Zentimetern beabstandet ist;
wobei die Mehrzahl von Näherungssensoren (7) dazu eingerichtet sind, um in Verbindung mit einer elektronischen Steuereinrichtung (8) zu arbeiten, die dazu eingerichtet ist, Befehlssignale für mindestens einen Leistungsantrieb des Traktors (1) zu erzeugen, der die Bewegung des Traktors (1) steuert;
wobei die elektronische Steuereinrichtung (8) dazu eingerichtet ist, um eine Warnposition zu erfassen, wenn die angebrachte Zugdeichsel (4) oder die von der Zugdeichsel getragenen Teile eine Position erreichen, die der rechten Seite (Z1) oder der linken Seite (Z2) entspricht;
wobei bei Erfassung der Warnposition die elektronische Steuereinrichtung (8) dazu eingerichtet ist, um den mindestens einen Leistungsantrieb des Traktors (1) zu betätigen, um einen Vorgang zu bewirken, sodass die angebrachte Zugdeichsel (4) und die von der Zugdeichsel getragenen Teile innerhalb der sicheren Zone (Z) bleiben.

2. Traktor (1) nach Anspruch 1, wobei die elektronische Steuereinrichtung (8) so eingerichtet ist, dass bei Erfassung der Warnposition die elektronische Steuereinrichtung (8) die Steuerung des mindestens einen Antriebs (10) betätigt, der das Lenken des Traktors steuert, sodass die Lenkfunktionen des Traktors (1) automatisch verändert werden.

3. Traktor (1) nach Anspruch 2, wobei die elektronische Steuereinrichtung (8) derart eingerichtet ist, dass sie den aktuellen Lenkwinkel der Vorderräder (7) des Traktors (1) für eine definierte Zeitdauer nach der Erfassung der Warnposition begrenzt oder reduziert.

4. Traktor (1) nach Anspruch 1, wobei die elektronische Steuereinrichtung (8) mit Mitteln zur Dateneingabe zur Eingabe dimensionaler Parameter des gezogenen Arbeitsgeräts (2) versehen ist; wobei die elektronische Steuereinrichtung (8) dazu eingerichtet ist, um den Betrag der Reduzierung des aktuellen Lenkwinkels oder des maximalen Lenkwinkels anhand der eingeführten Parameter zu berechnen.

5. Traktor (1) nach Anspruch 1, wobei die elektronische Steuereinrichtung (8) dazu eingerichtet ist, die Steuerung der Betätigungseinrichtungen zu steuern, die das Bremssystem des Traktors (1) betätigen, sodass bei Erfassung der Warnposition ein Bremsvorgang automatisch betätigt wird.

6. Traktor (1) nach Anspruch 5, wobei der automatische Bremsvorgang darüber hinaus dazu eingerichtet ist, von einer manuellen Betätigung des Bremspedals durch den Fahrer deaktiviert zu werden, um die Bremsbetätigung manuell zu steuern.

7. Traktor (1) nach einem der vorhergehenden Ansprüche, der Rücksichts- bzw. Rückblickeinrichtungen aufweist, wobei die elektronische Steuereinrichtung (8) dazu eingerichtet ist, bei Erfassung der Warnposition ein Steuersignal zur Bewegung der Rücksichts- bzw. Rückblickeinrichtungen zu erzeugen, sodass die Rücksichts- bzw. Rückblickeinrichtungen die rechte Seite (Z1) oder die linke Seite (Z2), wo die Warnposition erkannt wurde, fokussieren.

8. Traktor (1) nach Anspruch 1, wobei die elektronische Steuereinrichtung (8) dazu eingerichtet ist, sodass das Gebiet und die Form der sicheren Zone (Z) Begrenzungen aufweisen, die automatisch anhand der Geschwindigkeit des Traktors oder der Winkelgeschwindigkeit der Drehung des Lenkrades (13) des Traktors berechnet werden, sodass sich die Breite der sicheren Zone (Z) bei einer Erhöhung einer der genannten Geschwindigkeiten reduziert.

9. Traktor (1) nach Anspruch 8, wobei die elektronische Steuereinrichtung (8) dazu eingerichtet ist, sodass die sichere Zone (Z) Begrenzungen aufweist, die automatisch anhand einer der genannten Geschwindigkeiten berechnet werden, sodass bei der Erhöhung von einer der genannten Geschwindigkeiten die rechte und linke Seite (Z1, Z2) sich zunehmend einander annähern.

10. Traktor (1) nach Anspruch 1, wobei die elektronische Steuereinheit (8) dazu eingerichtet ist, mit einem automatisierten Fahrsystem zusammenzuwirken, das das Lenkrad steuert, um bei Erfassung der Warnposition eine Fahrkurve automatisch zu verändern.

## Revendications

1. Tracteur (1) avec des moyens de fixation pour un outil tracté (2) via un timon (4), le tracteur (1) comprenant une roue arrière droite (6) et une roue arrière gauche (6), une unité de commande (8) et un système anticollision,
**caractérisé en ce qu'**il comprend une pluralité de capteurs de proximité (7) conçus pour définir une zone de sécurité qui se situe entre la partie arrière du tracteur (1) et ledit outil tracté (2) lorsqu'il y est fixé ;
la zone de sécurité (Z) étant limitée par un côté latéral droit (Z1) espacé par rapport à la roue arrière droite (6) du tracteur à une distance de sécurité de quelques centimètres et par un côté latéral gauche (Z2) espacé par rapport à la roue arrière gauche (6) du tracteur à une distance de sécurité de quelques centimètres ;
la pluralité de capteurs de proximité (7) sont configurés pour fonctionner conjointement avec une unité de commande électronique (8) conçue pour générer des signaux de commande pour au moins un actionneur de puissance dudit tracteur (1) qui commande le mouvement du tracteur (1) ; l'unité de commande électronique (8) est conçue pour détecter une position d'avertissement lorsque le timon fixé (4) ou les parties portées par ledit timon atteignent une position correspondant au côté droit (Z1) ou au côté gauche (Z2) ;
lors de la détection de la position d'avertissement, l'unité de commande électronique (8) est conçue pour fonctionner sur au moins un actionneur de puissance du tracteur (1) pour produire une action de sorte que le timon fixé (4) et les parties portées par ledit timon restent dans la zone de sécurité (Z).

2. Tracteur (1) selon la revendication 1, dans lequel ladite unité de commande électronique (8) est conçue de telle manière que, lors de la détection de la position d'avertissement, l'unité de commande électronique (8) se charge de commander au moins un actionneur (10) qui actionne la direction du tracteur de manière à ce les éléments de direction du tracteur (1) soient modifiés automatiquement.

3. Tracteur (1) selon la revendication 2, dans lequel ladite unité de commande électronique (8) est conçue pour limiter ou réduire l'angle de braquage actuel des roues avant (7) du tracteur (1) pendant un laps de temps défini lors de la détection de la position d'avertissement.

4. Tracteur (1) selon la revendication 1, dans lequel l'unité de commande électronique (8) est équipée de moyens d'entrée de données pour saisir les paramètres dimensionnels dudit outil tracté (2) ; l'unité de commande électronique (8) est conçue pour calculer la réduction de l'angle de braquage actuel ou de l'angle de braquage maximal sur la base des paramètres saisis.

5. Tracteur (1) selon la revendication 1, dans lequel l'unité de commande électronique (8) est conçue pour commander les actionneurs qui agissent sur le système de freinage du tracteur (1) de sorte que, lors de la détection de la position d'avertissement, une action de freinage soit automatiquement activée.

6. Tracteur (1) selon la revendication 5, dans lequel l'action de freinage automatique est en outre configurée pour être désactivée par une action manuelle du conducteur sur la pédale de frein afin de commander manuellement l'action de freinage.

7. Tracteur (1) selon l'une quelconque des revendications précédentes comprenant des rétroviseurs, dans lequel l'unité de commande électronique (8) est conçue pour, lors la détection de la position d'avertissement, générer un signal de commande afin de déplacer les rétroviseurs de sorte que lesdits rétroviseurs soient dirigés vers le côté latéral droit (Z1) ou le côté latéral gauche (Z2), là où la position d'avertissement a été détectée.

8. Tracteur (1) selon la revendication 1, dans lequel l'unité de commande électronique (8) est conçue de sorte que la superficie et la forme de la zone de sécurité (Z) présentent des délimitations qui sont calculées automatiquement sur la base de la vitesse du tracteur ou de la vitesse angulaire de rotation de la roue directrice (13) du tracteur de sorte que la largeur de la zone de sécurité (Z) soit réduite si l'une desdites vitesses augmente.

9. Tracteur (1) selon la revendication 8, dans lequel l'unité de commande électronique (8) est configurée de sorte que la zone de sécurité (Z) présente des délimitations qui sont automatiquement calculées sur la base de l'une desdites vitesses afin que, si l'une desdites vitesses augmente, les côtés latéraux droit et gauche (Z1, Z2) se rapprochent progressivement.

10. Tracteur (1) selon la revendication 1, dans lequel l'unité de commande électronique (8) est configurée pour coopérer avec un système de conduite automatisé qui commande la roue directrice afin de modifier automatiquement un trajet lors de la détection de la position d'avertissement.
